(19) Europäisches Patentamt / European Patent Office / Office européen des brevets

(11) **EP 2 028 371 B1**

(12) **EUROPÄISCHE PATENTSCHRIFT**

(45) Veröffentlichungstag und Bekanntmachung des Hinweises auf die Patenterteilung:
**12.10.2011 Patentblatt 2011/41**

(51) Int Cl.:
*F03D 11/00* *(2006.01)* *G01W 1/12* *(2006.01)*

(21) Anmeldenummer: **08014359.7**

(22) Anmeldetag: **12.08.2008**

(54) **Vorrichtung und Verfahren zur Messung des wiederkehrenden Schattenwurfs einer Windenergieanlage**

Device and method for measuring repetitive shading of a wind turbine

Dispositif et procédé de mesure de l'ombre récurrente d'une éolienne

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **24.08.2007 DE 102007040036**

(43) Veröffentlichungstag der Anmeldung:
**25.02.2009 Patentblatt 2009/09**

(73) Patentinhaber: **Fachhochschule Kiel
24149 Kiel (DE)**

(72) Erfinder:
• **Schmarbeck, Sven-Peter
24107 Kiel (DE)**
• **Schukies, Holger
24159 Kiel (DE)**
• **Waller, Gerhard, Prof. Dr.
24232 Schönkirchen (DE)**
• **Freund, Hans-Dieter, Prof. Dr.
24161 Altenholz (DE)**

(74) Vertreter: **Biehl, Christian et al
Patentanwaltskanzlei Biehl
Schlieffenallee 5
24105 Kiel (DE)**

(56) Entgegenhaltungen:
DE-A1- 19 928 048      DE-A1- 19 929 970
DE-A1-102005 007 471

**Beschreibung**

Die Erfindung betrifft eine Vorrichtung zur Messung der Zeitdauer eines wiederkehrenden Schattenwurf einer Windenergieanlage mit umlaufendem Rotor zum Schutz von Anliegern einer solchen Installationen.

Windenergieanlagen (WEAn) erzeugen bei Sonnenschein einen rotierenden Schattenwurf, der auch die Lebens- und Arbeitsbereiche von Anliegern (bzw. die Fenster zu diesen) überstreichen kann. Viele Anlieger empfinden dies als störend oder sogar stark belästigend. Die Ursache der Belästigung wird darauf zurückgeführt, dass periodische Bewegungssignale als Stressoren wirken können, weil sie in der Natur sehr selten vorkommen und der Mensch vermutlich nicht evolutionär darauf vorbereitet ist. Es fällt ihm deshalb schwer, solche Signale als Bestandteil seiner Umwelt zu ignorieren, und seine Aufmerksamkeit wird zumindest teilweise durch die Bewegungssignale gebunden. Dies erfordert zusätzliche Konzentrationsleistung bei der Durchführung anderer Tätigkeiten und begünstigt Ermüdung und Stress.

Mit den immer größer werdenden Anlagen nehmen die zeitlichen und räumlichen Belastungen zu, d.h. die Beschattungszeiten werden länger und die Schattenreichweiten werden größer, so dass immer mehr Anlieger betroffen werden.

Damit Anlieger nicht zu sehr durch den rotierenden Schattenwurf belastet werden, sind in den "Schattenwurfhinweisen" (ein Regelwerk des Länderausschusses für immissionsschutz) Grenzwerte festgelegt worden, die von den WEAn nicht überschritten werden dürfen. Diese Grenzwerte sind:

| | |
|---|---|
| Maximale jährliche Beschattungszeit im worst case-Fall | - 30 Stunden |
| Maximale tägliche Beschattungszeit | - 30 Minuten |

Die 30 Stunden im worst case-Fall reduzieren sich durch Wolkenbildung, wechselnde Wind-richtungen und Stillstandszeiten der WEAn. Maximal können dabei tatsächlich 8 Stunden Schattenwurf auftreten. Dieser Maximalwert wird als weiterer Grenzwert definiert:

Maximale tatsächliche Beschattungszeit pro Jahr    - 8 Stunden

Die zitierten Schattenwurfhinweise kommen durch Einftihrungserlasse in den einzelnen Ländern zur Geltung und besitzen dadurch Verordnungscharakter. Sollten diese Grenzwerte für den Anlieger überschritten werden, so müssen die WEAn abgeschaltet werden. Windenergieanlagen verfügen daher über Abschaltmodule.

Als Stand der Technik sind hier beispielhaft die EP 1 194 690 B1, die DE 199 28 048 A1, die DE 103 18 695 A1 und die DE 10 2005 007 471 A1 zu nennen. Dabei kommen insbesondere lichtempfindliche Sensoren zum Einsatz, die die aktuelle Helligkeit der Sonnenstrahlung und das Ausmaß der Abschattung erfassen können und einer Auswerteeinheit übermitteln, welche algorithmisch über Steuermaßnahmen für die WEA zu befinden hat. Die Auswerteeinheit greift dabei auf so genannte Schattenwurfkalender zurück, die Zeitintervalle mit theoretisch möglicher Beschattung an vorgegebenen Immissionspunkten angeben. Solche Kalender werden gängig mit speziellen Schattenwurfprogrammen berechnet. Für weitere Einzelheiten zur Schattenwurfberechnung wird auf H.-D. Freund, "Systematik des Schattenwurfs von Windenergieanlagen", Forschungsbericht zur Umwelttechnik, FH Kiel (2000) hingewiesen.

Die Lichtsensoren gemäß oben genannter Patentdruckschriften sind als Zusatzkomponenten der WLA vorgesehen, was impliziert, dass sie unter Kontrolle der Betreiber stehen und insbesondere typisch auf dem Gelände des Betreibers, etwa an der WEA selbst, installiert sind, nicht aber an den tatsächlich relevanten Immissionspunkten in denHäusern der Anlieger.

Die Beschattungsvorhersagen und damit die Steuervorgaben der Abschaltmodule sind häufig ungenau. Das führt manchmal zu Streitfällen zwischen Anwohnern und WEA-Betreiben, Ein Schattendetektor am Immissionspunkt kann in dieser Situation für Klarheit sorgen. Zur Lösung dieser Messaufgabe wird ein erster Prototyp in T. Fricke, S. Schmarbeck, "Bau eines Schattendetektors zur zeitlichen Registrierung des Schattenwurfs von Windenergieanlagen", Diplomarbeit Fachhochschule Kiel (2003) vorgestellt. Der Hauptnachteil dieses Prototyps liegt in der Tatsache, dass er bei der Messung der Beschattungsdauer zwischen dem zu messenden wiederkehrenden Schatten und einer Beschattung durch andere Verursacher nicht unterscheiden kann. Dies birgt das Potenzial für unabsichtliche Falschmessungen wie auch für die mögliche gezielte Manipulation. Ein Schattendetektor nach diesem nächstkommenden Stand der Technik ist deshalb gerade bei der Auflösung von lteehtsstteitigkeiten noch nicht hilfreich.

Die vorliegende Erfindung stellt sich deshalb die Aufgabe, eine Vorrichtung bereitzustellen, mit der die tatsächliche Beschattungsdauer an einem beliebigen Immissionspunkt genau erfasst werden kann. Dabei sollen apparativ implementierte Maßnahmen sicherstellen, dass nur die Beschattung durch eine oder mehrere WEAn und nicht durch andere Verursacher gemessen wird.

Die Aufgabe wird gelöst durch eine Vorrichtung mit den Merkmalen des Anspruchs 1. Die Unteransprüche geben vorteilhafte Ausgestaltungen der Vorrichtung an.

Als Vorbemerkung zur nachfolgenden näheren Beschreibung sei darauf hingewiesen, dass die Rotation des Rotors einer WEA nicht immer von konstanter Winkelgeschwindigkeit gekennzeichnet ist. Die Drehgeschwindigkeit des Rotors wird häufig den jeweiligen Windgeschwindigkeiten angepasst, was bei böigem Wind zu erheblichen Schwankungen der Umlaufzeit schon innerhalb der üblichen Dauer weniger Umläufe führen kann. Der bewegte Schatten der Rotorblätter ist daher häufig unperiodisch. Das gilt besonders, wenn mehrere Rotoren hintereinander stehen. Insbesondere ist dann die Fourieranalyse einer Zeitreihe von Schattenimpulsen kein geeignetes Mittel, den Rotorschatten von Schatten anderer wiederkehrend bewegter Objekte (z.B. schwingender Baumast) zu unterscheiden. Im Folgenden soll nur noch von wiederkehrenden Schatten die Rede sein, um anzudeuten, dass keine festen Periodendauern als bekannt vorausgesetzt werden.

Die erfindungsgemäße Vorrichtung zur Schattenwurfmessung weist die folgenden Grundelemente auf:

- einen Lichtdetektor, umfassend wenigstens ein lichtsensitives Element (bevorzugt mit der Licliternpfindlichkeit des menschlichen Auges), das ein elektrisches Signal in Abhängigkeit von der einfallenden Lichtintensität erzeugt (z.B. Photodiode, Jencolor RGB-Sensor MCS3BT),
- einen Chronometer, ausgebildet zur Angabe von Datum und Uhrzeit mit einer Schnittstelle für die elektronische Bereitstellung derselben,
- einen elektronischen Datenspeicher,
- einen Analog/Digital-Wandler zur Digitalisierung des vom Lichtdetektor erzeugten elektrischen Signals,
- eine Recheneinheit (i. F. Mikroprozessor), die die Ausgabe des A/D-Wandlers, Daten des Chronometers und tabellierte Daten aus dem Datenspeicher verarbeitet und Werte in den Datenspeicher schreiben kann sowie
- ein als Vorwärts-Rückwärts-Zähler ausgebildetes Zählwerk, welches von der Recheneinheit angesteuert und ausgelesen werden kann.

Das Zählwerk kann dabei entweder als im Wesentlichen mechanisches oder auch als elektronisches Bauelement ausgeführt sein, oder aber es wird nur virtuell als Zählvariable in der Programmierung des Mikroprozessors realisiert. Das Zählwerk ist dazu ausgebildet, nur Zahlenwerte zwischen zwei vorgegebenen Endwerten anzuzeigen. Bevorzugt zählt das Zählwerk in ganzzahligen Schritten zwischen den Endwerten 0 und N. Eine etwaige Ansteuerung zum Überschreiten von N oder zum Unterschreiten von 0 wird ignoriert.

Das Zählwerk hat die Funktion eines Schalters, der bei Erreichen eines der Endwerte einen Schaltvorgang ausführt. Dieser kann in einer apparativen Ausführung des Zählwerks im Schließen eines Stromkreises bei Vorliegen des Wertes N und im Öffnen des Stromkreises bei Vorliegen des Wertes 0 bestehen. Ein virtuell realisierter Zähler - also Software-Implementierung - kann alternativ die Belegung einer Schaltvariablen mit dem Wert "EIN" oder 1 bei Zählwert N und entsprechend "AUS" bzw. 0 bei Zählwert 0 veranlassen. Dem Fachmann liegen weitere Ausgestaltungsmöglichkeiten des beschriebenen Schaltens gewiss nahe.

Es folgt die Beschreibung der Funktionsweise der erfindungsgemäßen Vorrichtung:

Die Vorrichtung ist zur ortsfesten Aufstellung an einem vorab bekannten Immissionspunkt für den Schattenwurf einer ebenfalls vorab bekannten beweglichen Installation (hier: WEA / Windpark) vorgesehen. Es ist somit möglich und erfindungsgemäß vorgesehen, einen Schattenwurfkalender zumindest für die Zeitspanne der geplanten Messung zu berechnen und im elektronischen Datenspeicher der Vorrichtung als Tabelle abzulegen. Ab Inbetriebnahme der erfindungsgemäßen Vorrichtung wird der Chronometer fortlaufend von der Recheneinheit ausgelesen und mit den tabellierten Daten verglichen. Eine tatsächliche Messung des Schattenwurfs soll nur innerhalb der tabellierten Zeitintervalle erfolgen, also nur wenn eine Beschattung durch die WEA am Immissionspunkt überhaupt möglich ist. Dies stellt praktisch eine Begrenzung des Winkelbereichs dar, aus dem das Sonnenlicht bei der Messung auf den Lichtdetektor einfallen kann. Etwaig vorhandene andere Schattenverursacher (z.B. schwingende Äste), die nicht zufällig in dem so begrenzten Winkelbereich vorliegen, können somit keinesfalls zur Schattenmessung beitragen.

Innerhalb der im Schattenwurfkalender aufgeführten Zeitintervalle wird die Lichtintensität kontinuierlich abgetastet. Dabei gibt der Lichtdetektor proportional zur Helligkeit ein elektrisches Signal an den AD-Wandler aus, der das Signal zeitlich Schritt haltend digitalisiert. Die Helligkeitswerte werden in aufeinander folgenden Zeitfenstern als Funktion der Zeit erfasst und als Datentabelle dem Prozessor zur Auswertung bereitestellt. Die Auswertung erfolgt unmittelbar nach Beendigung eines jeden Zeitfensters.

Die Analyse einer oben beschriebenen Datentabelle zielt auf die Beurteilung ab, ob innerhalb des untersuchten Zeitfensters ein signifikanter Schattenwurf auf dem Lichtdetektor auftritt oder nicht. Diese Analyse erfolgt vollständig im Mikroprozessor des Schattendetelctors, d.h. sie wird durch Software realisiert und ist natürlich als solche austauschbar. Das in der Erfindung verwendete Verfahren zur Schattenanalyse entspricht in den Grundzügen dem von Fricke und Schmarbeck (s. o.) und wird in dem Fachmann an sich bekannter Weise umgesetzt. Im Folgenden sollen diese Grundzüge kurz dargelegt werden für eine vollständige Darstellung der Arbeitsweise des erfindungsgemäßen Schattendetektors.

Das Analyseverfahren geht von der Voraussetzung aus, dass in der erfindungsgemäßen Vorrichtung ein Lichtdetektor vorliegt, der die Lichtempfindlichkeit des menschlichen Auges aufweist. Dies stellt eine besonders bevorzugte Ausgestaltung der Erfindung dar. Ein weniger empfindlicher Detektor wäre offensichtlich nicht zweckmäßig, wohingegen ein empfindlicherer Sensor eine komplexere Auswertung erfordern würde, die die tatsächliche Wahrnelunbarkeit der Schatten durch das Auge zusätzlich zu bewerten hätte.

An dieser Stelle sei betont, dass sich die Erfindung nicht auf einen bestimmten Typ Lichtdetektor eingeschränkt verstanden wissen will. Sofern ein Lichtdetektor mit höherer Empfindlichkeit als das Auge verwendet wird, ist lediglich die Software des Prozessors anzupassen. Für die wesentliche Idee der vorliegenden Erfindung ist dies aber ohne Belang.

Das menschliche Auge beurteilt Helligkeitsunterschiede nicht absolut, sondern relativ. Das Auge sieht einen Schatten als Leuchtdichteunterschied zwischen Schatten und Umgebung im Verhältnis zur Leuchtdichte der Umgebung allein. Die vom Auge "messbare" physikalische Größe ist der Schwellenkontrast

$$\frac{\Delta L}{L_U} = \frac{L_U - L_S}{L_U}$$

mit    $L_U$: Leuchtdichte der Umgebung

       $L_S$: Leuchtdichte des Schattens

Leuchtdichteunterschiede können vom Auge nicht unbegrenzt wahrgenommen werden. Für bewegte Helligkeitsmuster liegt die Sichtbarkeitsschwelle bei 2,5 %. Dieser Wert gilt für Rechtecksimpulse. Für beliebige Impulsformen sind die Verhältnisse komplizierter. Nach dem Talbotschen Gesetz muss näherungsweise der zeitliche Mittelwert der Leuchtdichteschwankung diesen Schwellwert überschreiten, damit ein Schatten wahrnehmbar ist. Es ist daher eine Mittelwertbildung über die Zeitintegration des Impulses vorzunehmen.

$$\overline{\Delta L} = \frac{1}{T} \int_0^T \Delta L(t)\, dt$$

mit    T: Länge des Schattenimpulses

Der Schwellenkontrast ergibt sich aus diesem Mittelwert dividiert durch $L_U$. Die Signifikanz eines Schattenimpulses wird in der vorliegenden Erfindung an der Sichtbarkeitsgrenze (Schwellenkontrast = 2,5 %) festgelegt, d.h. ein Schattenimpuls liegt vor, wenn dieser Wert überschritten wird.

Da geringe Helligkeitsschwankungen als weniger störend empfunden werden, könnte die Sichtbarkeifisgrenze in Zukunft durch eine höher liegende Zumutbarkeitsgrenze ersetzt werden. Auch dies wäre im beschriebenen Verfahren sehr einfach zu ändern.

Sofern die Recheneinheit entscheidet, dass ein signifikanter Schatten erkennbar ist, steuert sie das Zählwerk an und erhöht den Zähler (bevorzugt bei einem 0 bis N Zähler um 1). Wird hingegen keine Beschattung des Lichtdetektors erkannt, verringert die Recheneinheit den Zählwert wieder entsprechend (also auch um 1). Der Initialwert des Zählers liegt bei Beginn der Messung stets bei 0, die Schaltvariable ist "AUS" oder 0 bzw. der Stromkreis offen.

Eine wiederkehrende Beschattung durch die WEAn soll dann vorliegen, wenn in einer aufeinander folgenden Sequenz von Zeitfenster jedes Mal ein Schatten erkannt wird, d.h. wenn das Zählwerk bis zum Wert N hoch zählt. Dann wird die Schaltvariable auf "EIN" oder 1 gesetzt bzw. ein Stromkreis geschlossen und die Recheneinheit schreibt wenigstens den Zeitpunkt des Einschaltens in die elektronische Speichereinheit. Solange die wiederkehrende Beschattung andauert, bleibt der Zähler auf dem Wert N. Sollte ein einzelnes Zeitfenster keinen Schattenwurf erkennen lassen, wird der Zähler zwar heruntergezählt, aber falls ein Schatten im nächsten Fenster auftritt, wird der Zähler wieder erhöht. Erst wenn in N aufeinander folgenden Zeitfenstern kein Schatten erkannt wird, erreicht der Zähler wieder den Wert 0, und es findet ein weiterer Schaltvorgang statt. Die Recheneinheit schreibt dann mindestens den Zeitpunkt des Ausschaltens (oder wahlweise die verstrichene Zeit seit dem Einschalten) in die Speichereinheit.

Am Ende der Cresamtmesszeit (insbesondere bei Ablauf des tabellierten Schattenkalenders) können dann alle gespeicherten Zeiten ausgelesen und zur Berechnung der Gesamtbeschattungsdauer herangezogen werden. Gemeinhin wird die einfache Addition der gespeicherten Zeitspannen hierfür ausreichen.

Die soweit beschriebene erfindungsgemäße Vorrichtung ist prinzipiell geeignet, wiederkehrende Schatten völlig beliebiger beweglicher Installationen zu erfassen und die Beschattungszeiten festzustellen - vorausgesetzt ein genauer Schattenwurfkalender steht zur Verfügung. Allerdings ist die Messung für gewöhnlich nur effektiv und verlässlich, wenn die bislang nicht näher bestimmte Konstante N sowie die Breite der Zeitfenster auch für die zu betrachtende Schattenquelle angemessen gewählt werden.

Konkret für Windenergieanlagen kann davon ausgegangen werden, dass der Schatten des langsamsten Rotors (insbesondere einer Megawatt-Anlage) wenigstens alle 2,5 Sekunden den Immissionspunkt überstreicht. Dies korrespondiert mit Werten von 8 Rotorumläufen pro Minute bei drei Rotorblättern. Kleinere Anlagen drehen sich schneller, und insbesondere bei hintereinander stehenden WEAn, die einen gemeinsamen Schatten auf den Immissionspunkt werfen, treten sehr viel höhere Frequenzen auf.

Die genaue Anzahl der Schattendurchläufe spielt für die Bestimmung der Beschattungsdauer zunächst keine Rolle. Allerdings liegt diese Information natürlich in der zu analysierenden Datentabelle mit den digitalisierten Helligkeitswerten vor. Es ist eine vorteilhafte Ausgestaltung der Erfindung, wenn beim Beginn einer messbaren Beschattungsdauer neben der aktuellen Zeit auch diese Datentabelle in die Speichereinheit geschrieben wird, sei es für alle oder nur für zuvor ausgewählte Zeitfenster innerhalb der Beschattungsdauer. Auf diese Weise ist bei der nachträglichen Auswertung z.B. auch eine Aussage über die tatsächliche Frequenzverteilung des wiederkehrenden Schattens möglich. Sehr hohe Frequenzanteile können eine besonders starke Beeinträchtigung darstellen (vgl. Stroboskop-Lampe). Selbstverständlich kann es auch vorteilhaft sein, aus Gründen der Speicherplatzersparnis nur einige zusätzlich berechnete Parameter - etwa die Fourier-Koeffizienten - anstelle der gesamten Datentabelle abzuspeichern.

Für die Nutzung der Erfindung bei WEAn sollte die Breite der Zeitfenster, die auf Schattenimpulse analysiert werden, an den maximalen Impulsabstand angelehnt sein. Dabei ist es sowohl möglich, eine konstante Fensterbreite vorzugeben, als auch die dynamische Festlegung der Zeitfenster zu erlauben. Beispielsweise kann ein neues Zeitfenster zu Beginn eines Schattenimpulses vom Prozessor automatisch geöffnet und am Ende des Impulses wieder geschlossen werden, wobei sich der Prozessor z.B. an Flankensteigungen des Leuchtdichtesignals orientiert. Auch bei dieser automatischen Festlegung sollte die maximale Fensterbreite jedoch auf den größtmöglichen Impulsabstand des wiederkehrenden Schattens begrenzt bleiben. Von daher ist auf jeden Fall eine angemessene maximale Fensterbreite vorzugeben (in der Software des Analyseverfahrens).

Praktische Funktionskontrollen der erfindungsgemäßen Vorrichtung an realen WEAn haben ergeben, dass bei Zeitfenstern der vorgegebenen Maximaldauer $\Delta t$ = 2,5 s die Obergrenze des Zählwerks vorzugsweise zu N = 6 eingerichtet werden sollte. Mit diesen Parametern lässt sich für WEAn eine ausgezeichnete Unterscheidung zwischen wiederkehrender und zufälliger ("event-basierter") Beschattung erreichen. Die Vorrichtung ist zugleich relativ sicher gegenüber absichtlicher Manipulation, da eine solche auf Basis der Beeinflussung der tatsächlichen Lichtverhältnisse einen relativ hohen Aufwand darstellen würde. Überdies dürften die meisten Manipulationsversuche bei einer etwaigen Auswertung aufgezeichneter Datentabellen (s. o.) auffällig werden.

Konstruktionsbedingt zeigen registrierte und wahre Schattenwurfzeit offenbar einen zeitlichen Versatz von bis zu N*$\Delta t$ beim Beginn der Beschattung. Dies wird aber einerseits am Ende der Beschattung wieder weitgehend kompensiert, und andererseits liegt der Versatz höchstens in der Größenordnung einiger Sekunden. Bei der geforderten Messgenauigkeit von einer Minute sind die Registrierungsunschärfen ohne Bedeutung, Vorzugsweise wird die gesamte erfindungsgemäße Vorrichtung in einem verschließba-ren (ggf. verplombten) Gehäuse integriert, aus dem nur der Lichtdetektor herausragt. Idealerweise ist die Vorrichtung nach dem Stand der Technik energieautark ausgelegt. Gleichwohl darf angenommen werden, dass ein Anwohner, der die Aufstellung des Geräts befürwortet, auch zur Versorgung mit Netzstrom bereit ist.

Besonders vorteilhafte Ausgestaltungen der Erfindung sind wie folgt:

Berechnung des Schattenkalenders mit einem physikalischen Modell. Ein solches unterscheidet sich von einem Modell, das nur geometrische Verhältnisse berücksichtigt und dadurch Beschattungsdauern meist überschätzt, durch die Einbeziehung physikalischer Effekte, allen voran der Lufttrübung. Letztere wirkt sich beispielsweise effektiv verkürzend auf den Schattenwurf aus. Für weitere Informationen sei auf H.-D. Freund, "Einflüsse der Lufttrübung, der Sonnenausdehnung und der Fltigelform auf den Schattenwurf von Windenergieanlagen", Forschungsbericht zur Umwelttechnik, Fachhochschule Kiel (2002) verwiesen. Die Beschattungsceiten aus einem physikalischen Modell sind wesentlich genauer und grenzen den Schattenwurf stärker ein als die Rechenergebnisse geometrischer Modelle. Speziell als Führungs- und Auswertprogramm für den erfindungsgemäßen Detektor wurde ein Schattenwurfprogramm entwickelt, das allerdings nicht Gegenstand des Schutzbegehrens sein soll, u. a. weil es der Öffentlichkeit bereits unter der Bezeichnung "ShadowTimes" bekannt gemacht wurde. Es sei an dieser Stelle betont, dass sich alle Schattenwurfprogramme, die ausreichend genaue Schattenkalender liefern, zum Betreiben der erfindungsgemäßen Vorrichtung verwenden lassen.

Auslegung des Chronometers als Funkuhr: Da es vorkommen kann, dass die gesamte Vorrichtung gelegentlich direkter Sonnenbestrahlung ausgesetzt ist, kommt es teilweise zu starken Temperaturschwankungen im Gehäuse. Bei Langzeitmessungen kann dies eine Drift des Chronometers bewirken, die zu falschen Messintervallen beim Vergleich mit dem internen Schattenwurfkalender führt. Dies wird vermieden durch die tägliche Synchronisation mit dem Funk-Zeitsignal.

Integration eines GPS-Empfängers: Weil der interne Schattenkalender für einen vorab bekannten Immissionspunkt berechnet wird, besteht eine grundsätzlich sehr einfache Möglichkeit der Manipulation natürlich im Verbringen des Gerätes an einen anderen Ort. Um dem vorzubeugen, kann ein eingebauter GPS-Empfänger ("Global Position System") oder eine äquivalente Einrichtung die tatsächliche Position des Geräts möglichst genau bei jedem Einschalten der Beschattungsmessung bestimmen, und diese ist dann ebenfalls im elektronischen Datenspeicher abzulegen. Überdies kann so auch die korrekte Auswahl des vorgesehenen Immissionspunktes später bei der Protokollauswertung belegt werden.

Integration einer mobilen Kommunikationsschnittstelle (GSM-Modul): Eine solche Schnittstelle kann in erster Linie dazu dienen, die ordnungsgemäße Funktionsweise der Vorrichtung aus der Ferne zu überwachen. Beispielsweise kann das GSM-Modul ein Signal senden, wenn seine Netzstromversorgung unterbrochen wird und es auf interne Energiequellen zurückgreifen muss bzw. wenn Netzversorgung danach wieder hergestellt wird. Natürlich kann jede vom Gerät identifizierbare Störung per Funkmitteilung berichtet werden und ggf. dadurch auch einen Servicebesuch anfordern.

Ein integriertes GSM-Modul kann in einer Weiterbildung der hier beschriebenen Erfindung auch dazu dienen, Beginn und Ende einer wiederkehrenden Beschattung am Immissionspunkt sofort per Funk mitzuteilen. Diese Mitteilung kann dann insbesondere unmittelbar an den Betreiber einer WEA erfolgen, der diese Signale aufzeichnet und ggf. sogar zur Optimierung der Steuerung seiner Anlagen direkt verwenden kann.

Der gedankliche neue Aspekt dieser Idee ist die grundsätzliche Aufteilung der Kontrolle über WEA und Schattendetektoren. Der Schattendetektor - in einer erschwinglichen Serienausführung - würde von einem Anwohner erworben (ggf. leihweise gegen geringe Gebühr) und betrieben, der ein unmittelbares Interesse an einer zumutbaren maximalen Beschattungsdauer hat. Um etwaige Übertretungen nachzuweisen, benutzt er sein eigenes, vom WEA-Betreiber unabhängiges und dennoch standardisiertes Messgerät, das einen internen Datenlogger besitzt. Zugleich stellt er dem WEA-Betreiber Funksignale bereit, um diesem die Gelegenheit zu geben, den Betrieb seiner WEA passend zu steuern. Der WEA-Betreiber müsste somit nicht mehr für Erwerb und Wartung der Messgeräte, sondern nur noch für die Entgegennahme und Verarbeitung der Messinformation über einen von ihm eingerichteten Dienst sorgen. Im Übrigen könnte sich der anwohnende Erwerber eines Schattendetektors mit eingebautem GPS über ein GSM-Modul auch einen jederzeit aktuellen Schattenkalender vom WEA-Betreiber herunterladen, da dieser ein Eigeninteresse an einer möglichst korrekten Messung hat.

Die vorstehend beschriebene Nutzung der erfindungsgemäßen Schattendetektoren mit den Zusatzmodulen in einem Informationsnetzwerk unter Beteiligung des WEA-Betreibers könnte eine Win-Win-Situation darstellen.

Die Anlieger einer WEA müssen nicht unbedingt wollen, dass in ihrem Lebensraum (etwa Wohnung) die Grenzwerte der Schattenwurfhin weise eingehalten werden, z.B. wenn sie sich den größten Teil des Tages ohnehin gar nicht darin aufhalten. Von daher stellt die Einhaltung der Grenzwerte durch den WEA-Beäeiber für alle möglichen Immissionspunkte heute eine nicht optimal effektive Maßnahme dar. Sofern die WEA-Betreiber auch weiterhin verpflichtet blieben, ausreichend geringe Beschattungsdauern an den Immissionspunkten mit Sensor - also solchen, die den Anliegern wichtig sind - zu garantieren, während sie ansonsten - wo dies eben nicht vom Anlieger eingefordert wird - keine Beschränkungen für den Betrieb der WEA auferlegt bekämen, könnte durchaus eine signifikante Mehrleistung der WEA erzeugt werden. Dies könnte die anfallenden Kosten eines Informationsnetzwerkes und Datenverarbeitungsdienstes für die Sensormesaungen durchaus tragen oder sogar überkompensieren.

Auf der Vorteilsseite des Anliegers würde durch das Netzwerk allen Rechtsstreitigkeiten über Schattenwurf praktisch die Grundlage entzogen, da der Anlieger seinen Rechtsanspruch einfach durch Aufstellen eines Sensors durchsetzen könnte.

**Patentansprüche**

1. Vorrichtung zur Messung wenigstens der Dauer des wiederkehrenden Schaltenwurfs einer Windenergieanlage an einem bestimmten Messort, mit wenigstens einem lichtsensitiven Element, das ein elektrisches Signal in Abhängigkeit von der einfallenden Leuchtdichte erzeugt, die Vorrichtung umfassend:

   a. einen Chronometer, ausgebildet zur elektronischen Bereitstellung von Datum und Uhrzeit,
   b. einen elektronischen Datenspeicher, der einen Schattenwurfkalender mit tabellierten Zeitintervallen, in denen eine Beschattung des Messorts durch eine WEA möglich ist, vorhält,
   c. einen Analog/Digital-Wandler zur Digitalisierung des vom Lichtdetektor erzeugten elektrischen Signals, und
   **gekennzeichnet durch**:
   d. eine Recheneinheit, die die Ausgabe des Analog/Digital-Wandlers, Daten des Chronometers und den Schattenwurfkalender verarbeitet und für eine Folge von Zeitfenstern entscheidet, ob in einem Zeitfenster ein zu messender Schattenimpuls auf dem Element erkennbar ist, wobei die Recheneinheit nur Zeitfenster innerhalb der im Schattenwurtkalender tabellierten Zeitintervalle berücksichtigt,

e. ein von der Recheneinheit ansteuerbares Zählwerk, das als zwischen zwei Endwerten zählender Vorwärts/Rückwärts-Zähler ausgebildet ist, bei Vorliegen eines Schattenimpulses innerhalb eines Zeitfensters vorwärts und anderenfalls rückwärts zählt und bei Erreichen eines der beiden Endwertes das Schreiben wenigstens der Chronometerausgabe in den Datenspeicher veranlasst.

2. Vorrichtung nach Anspruch 1, **dadurch gekennzeichnet, dass** das Zählwerk eine Zählvariable bei der Programmierung der Recheneinheit ist; wobei bei Erreichen eines der beiden Endwerte ein Programmbefehl ausgeführt wird.

3. Vorrichtung nach einem der vorangehenden Ansprüche, **dadurch gekennzeichnet, dass** die Lichtempfindlichkeit des lichtsensitiven Elements der Lichtempfindlichkeit des menschlichen Auges entspricht.

4. Vorrichtung nach einem der vorangehenden Ansprüche, **dadurch gekennzeichnet, dass** die maximale Breite der Zeitfenster dem größtmöglichen Abstand zweier Schattenimpulse des wiederkehrenden Schattens entspricht.

5. Vorrichtung nach Anspruch 4, **dadurch gekennzeichnet, dass** für die Messung des Schattens einer Windenergieanlage Zeitfenster der Maximalbreite $\Delta t = 2,5$ s vorgesehen sind.

6. Vorrichtung nach einem der vorangehenden Ansprüche, **dadurch gekennzeichnet, dass** für die Messung des Schattens einer Windenergieanlage das Zählwerk in ganzen Zahlen zwischen den Endwerten 0 und 6 zählt.

7. Vorrichtung nach einem der vorangehenden Ansprüche, **gekennzeichnet durch** einen Chronometer, der sich wenigstens einmal täglich mit dem Standardzeitsignal synchronisiert.

8. Vorrichtung nach einem der vorangehenden Ansprüche, **gekennzeichnet durch** einen GPS.Empfänger mit Schnittstelle zur elektronischen Positionsausgabe wenigstens in den Datenspeicher.

9. Vorrichtung nach einem der vorangehenden Ansprüche, **gekennzeichnet durch** eine Schnittstelle für Mobilkommunikation.

10. Vorrichtung nach Anspruch 9, **gekennzeichnet durch** automatische Mitteilung des Betriebszustandes an eine Überwachungsstation.

11. Vorrichtung nach einem der Ansprüche 9 oder 10, **gekennzeichnet durch** automatische Mitteilung eines Schreibvorgangs in den Datenspeicher.

**Claims**

1. A device for measuring at least the duration of the repetitive shadow impact of a wind turbine at a specific measuring location, with at least one light-sensitive element that generates an electric signal as a function of the incoming luminous density, the device comprising:

   a. a chronometer designed for electronically providing date and time,
   b. an electronic data storage unit that maintains a shadow impact calendar with time intervals in table form in which shadowing of the measuring location is possible by a wind turbine,
   c. an analog/digital converter for digitizing the electric signals generated by the light detector and **characterized by**:
   d. a computational unit that processes the output of the analog/digital converter, data of the chronometer and of the shadow impact calendar and decides for a sequence of time windows whether a shadow pulse to be measured can be detected on the element during a time window, the computational unit taking into account only time windows inside the time intervals in the shadow impact calendar in table form,
   e. a counter that can be driven by the computational unit and is designed as forward/backward counter counting between two end values, counts forwards during a time window when a shadow pulse is present, else backwards, and causes at least the chronometer output to be written into the data storage unit when one of the two end values has been reached.

**2.** The device according to Claim 1, **characterized in that** the counter is a counting variable when programming the computational unit, a program command being executed on reaching one of the two end values.

**3.** The device according to one of the preceding claims, **characterized in that** the light sensitivity of the light-sensitive element corresponds to the light sensitivity of the human eye.

**4.** The device according to one of the preceding claims, **characterized in that** the maximum width of the time window corresponds to the largest possible distance of two shadow pulses of the repetitive shadow.

**5.** The device according to Claim 4, **characterized in that** time windows having a maximum width of $\Delta t = 2.5$ s are provided for measuring the shadow of a wind turbine.

**6.** A device according to one of the preceding claims, **characterized in that** for measuring the shadow of a wind turbine the counter measures in integers between the end values 0 and 6.

**7.** The device according to one of the preceding claims, **characterized by** a chronometer that synchronizes with the standard time signal at least once per day.

**8.** The device according to one of the preceding claims, **characterized by** a GPS receiver having an interface for electronic position output at least into the data storage unit.

**9.** The device according to one of the preceding claims, **characterized by** an interface for mobile communication.

**10.** The device according to Claim 9, **characterized by** automatically reporting the operating state to a monitoring station.

**11.** The device according to one of Claims 9 or 10, **characterized by** automatically reporting a write process into the data storage unit.

## Revendications

**1.** Dispositif pour la mesure à minima de la durée d'une projection d'ombre répétitive d'une centrale à énergie éolienne sur un lieu de mesure déterminé, à l'aide d'au moins un élément photosensible, qui génère un signal électrique en fonction de la luminance incidente, comprenant :

a. un chronomètre, pour la mise à disposition électronique de la date et de l'heure,
b. une mémoire de données électronique, contenant un calendrier de projections d'ombre avec des intervalles de temps tabulés pendant lesquels le lieu de mesure peut être couvert par l'ombre d'une centrale à énergie éolienne,
c. un convertisseur analogique-numérique pour la numérisation du signal électrique généré par le détecteur de lumière, **caractérisé par** :
d. une unité de calcul, qui traite la sortie du convertisseur analogique-numérique, les données du chronomètre et du calendrier de projections d'ombre et qui décide pour une séquence de fenêtres temporelles si une impulsion d'ombre à mesurer avec l'élément est identifiable, avec l'unité de calcul ne tenant compte que des fenêtres temporelles qui se trouvent dans les intervalles de temps tabulés dans le calendrier de projections d'ombre,
e. un compteur commandé par l'unité de calcul, constitué d'un compteur-décompteur fonctionnant entre deux valeurs finales, qui incrémente si une impulsion d'ombre est présente pendant une fenêtre temporelle et qui décrémente dans le cas contraire et qui ordonne au moins l'enregistrement de la sortie du chronomètre dans la mémoire de données lorsqu'une des deux valeurs finales a été atteinte.

**2.** Dispositif selon la revendication 1, **caractérisé par le fait que** le compteur est une variable de comptage dans la programmation de l'unité de calcul; une instruction du programme est exécutée lorsqu'une des deux valeurs finales a été atteinte.

**3.** Dispositif selon une des revendications ci-dessus, **caractérisé par le fait que** la photosensibilité de l'élément photosensible correspond à la photosensibilité de l'oeil humain.

**4.** Dispositif selon une des revendications ci-dessus, **caractérisé par le fait que** la largeur maximale des fenêtres temporelles correspond à la distance maximale entre deux impulsions d'ombre de l'ombre répétitive.

5. Dispositif selon la revendication 4, **caractérisé par le fait que** des fenêtres temporelles de la largeur maximale de $\Delta t = 2,5$ s sont prévues pour la mesure de l'ombre d'une centrale à énergie éolienne.

6. Dispositif selon une des revendications ci-dessus, **caractérisé par le fait que** le compteur compte en nombres entiers entre les valeurs finales de 0 et 6 pour la mesure de l'ombre d'une centrale à énergie éolienne.

7. Dispositif selon une des revendications ci-dessus, **caractérisé par** un chronomètre qui se synchronise au moins une fois par jour avec le signal de temps standard.

8. Dispositif selon une des revendications ci-dessus, **caractérisé par** un récepteur GPS avec une interface pour la sortie électronique de la position, au moins dans la mémoire de données.

9. Dispositif selon une des revendications ci-dessus, **caractérisé par** une interface pour la communication mobile.

10. Dispositif selon la revendication 9, **caractérisé par** la notification automatique de l'état de fonctionnement à une station de surveillance.

11. Dispositif selon une des revendications 9 ou 10, **caractérisé par** la notification automatique d'une opération d'écriture dans la mémoire de données.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 1194690 B1
- DE 19928048 A1
- DE 10318695 A1
- DE 102005007471 A1

### In der Beschreibung aufgeführte Nicht-Patentliteratur

- **H.-D. FREUND.** Systematik des Schattenwurfs von Windenergieanlagen. *Forschungsbericht zur Umwelttechnik,* 2000
- **T. FRICKE ; S. SCHMARBECK.** Bau eines Schattendetektors zur zeitlichen Registrierung des Schattenwurfs von Windenergieanlagen. *Diplomarbeit Fachhochschule Kiel,* 2003
- **H.-D. FREUND.** Einflüsse der Lufttrübung, der Sonnenausdehnung und der Fltigelform auf den Schattenwurf von Windenergieanlagen. *Forschungsbericht zur Umwelttechnik,* 2002